# EUROPEAN PATENT SPECIFICATION

(11) **EP 1 530 936 B1**
(45) Date of publication and mention of the grant of the patent: **23.01.2008**
(21) Application number: 04026894.8
(22) Date of filing: 12.11.2004
(51) Int. Cl.: A47G 25/30

(54) **Knitwear hanger**
Kleiderbügel für Strickware
Cintre pour vêtement tricoté

(30) Priority: 12.11.2003 US 519419 P
(43) Date of publication of application: 18.05.2005
(73) Proprietor: SPOTLESS PLASTICS PTY. LTD., Moorabbin, Victoria (AU)
(72) Inventor: Gouldson, Stanley F., Northport New York 11768 (US)
(74) Representative: Körber, Martin Hans

(56) References cited:
- EP-A- 1 074 205
- DE-A- 2 659 737
- DE-A- 10 015 072
- DE-U- 7 620 844
- GB-A- 2 290 226
- US-A- 4 029 239
- US-A- 6 085 950

## Description

### Background of the Invention

### Field of Invention

The present invention relates to garment hangers, and more particularly, pertains to a molded plastic garment hanger having enhanced garment retention structure along its elongated arms that is particularly useful for supporting and displaying knitwear garments.

### Description of Related Art

In industry, particularly such as the garment manufacturing industry, plastic garment hangers are widely employed for the purpose of shipping and displaying garments, such hangers frequently being of the inexpensive ship-on type whereby the garment is shipped from the manufacturer or wholesaler to the retailer while suspended from the hanger. Generally, such garment hangers are inexpensive single-piece or unitary molded plastic structures which are adapted to be either discarded at the time of sale, returned to the garment manufacturer or provided to a customer free of charge in conjunction with the purchase of the garment suspended therefrom.

Garment hangers of that type may either be simply constructed as molded plastic structures incorporating a unitary or metal central hook portion adapted to be suspended from a suitable support, such as a garment rack or the like, and with a hanger body portion having arms extending in opposite directions from the base of the hook portion so as to facilitate a garment to be suspended therefrom. When needed for a specific use, the opposite or distal ends of the body portion or arms may be formed with suitable grip slots or clip members to enable the attachment of various kinds of garments thereto, such as underwear, slips, brassieres, multiple garments, and the like.

The prior art includes a number of garment hangers that are molded so as to receive various indicia or logos, which may be representative of the garment manufacturer or designer, or possibly the retail establishment, to provide a form of advertisement and to also identify the origin of the garment being suspended therefrom. An embossed logo may also be imprinted therein so as to provide various color contrasts provided through molded raised or recessed surfaces representative of a logo, advertisement, or the like as mentioned hereinbefore.

The prior art also includes garment hangers for coats, blazers and other heavier garments that are fitted with pads or rubber strips, along the shoulder portion, or non-slip adhesive coatings on the pants bar to help retain the garment on the hanger.

U.S. Pat. No. 4,655,867 to Berkovits discloses a garment hanger having a non-slip strip of resilient material adhesively secured to the shoulder portions of the hanger.

U.S. Pat. No. 4,606,482 to McHugh discloses a rod-type garment hanger having a pre-formed sleeve of non-slip protective material that is slipped over the rod portions of the hanger to assist in retaining garments on the hanger.

U.S. Pat. No. 4, 058, 241 to Craig discloses a tightly braided cover which is plaited around the periphery of a garment hanger to provide protection for the garment and to prevent garment slippage from the hanger.

U.S. Pat. No. 5,020,705 to Garrison discloses a garment clamping hanger which has garment gripping pads molded of a synthetic rubber which has a high coefficient of friction when firmly pressed against fabric and avoids marking or adhering to the fabric of a garment.

Finally, structure and method of manufacturing coinjected plastic garment hangers are disclosed in U.S. Patent No. 6,085,950 issued to Gouldson, et al..
GB-A-2 290 226 discloses a garment hanger comprising a body portion, means associated with the body portion for suspending the garment hanger from a rail and two arms extending outwardly in opposite directions from the body portion, wherein the body portion is formed from a first material and the end farthest from the body portion of at least one of the arms is formed from a second material, the rigidity of the second material being less than that of the first material. Such a hanger is particularly suitable for use with knitwear garments.
DE-A-26 59 737 discloses a hanger with a comb-shaped profile on the upper surface of an arm of a hanger to prevent a garment to slip off the hanger.
DE-U-76 20 844 discloses a hanger with an upper surface being provided with a staggered pattern of upward protrusions. These protrusions server for retaining a garment on the hanger. It is an object of the present invention to provide a hanger with an improved frictional interface between the hanger and the garment. This object is solved by a hanger having the features according to claim 1. Preferred embodiments are defined in the dependent claims.

### Brief Summary of the Invention

Therefore, the present invention discloses a hanger for a garment comprising a body portion having a hook member extending upward, and two arms extending outward from the body portion in opposing directions from one another. At least one arm has a substantially contiguous garment supporting surface on an upwardly facing side comprising an arcuate surface, the garment supporting surface having a plurality of locking cells along a lateral edge of the upwardly facing side, the locking cells comprising localized concave depressions in the surrounding garment supporting surface. The garment hanger may be a molded plastic garment hanger, and may be enhanced by molding a portion of the upwardly facing side from a non-slip material in a co-extrusion process.

### Brief Description of the Drawings

These and other features, aspects and benefits of the present invention will be apparent to those skilled in the art with reference to the following detailed description and accompanying figures, where like reference numerals refer to like features across the several views, and wherein;

Fig. 1 illustrates a front elevation view of a hanger according to an exemplary embodiment of the present invention;

Fig. 2 illustrates a cross-sectional view of the hanger of Fig. 1, taken along section line 2-2;

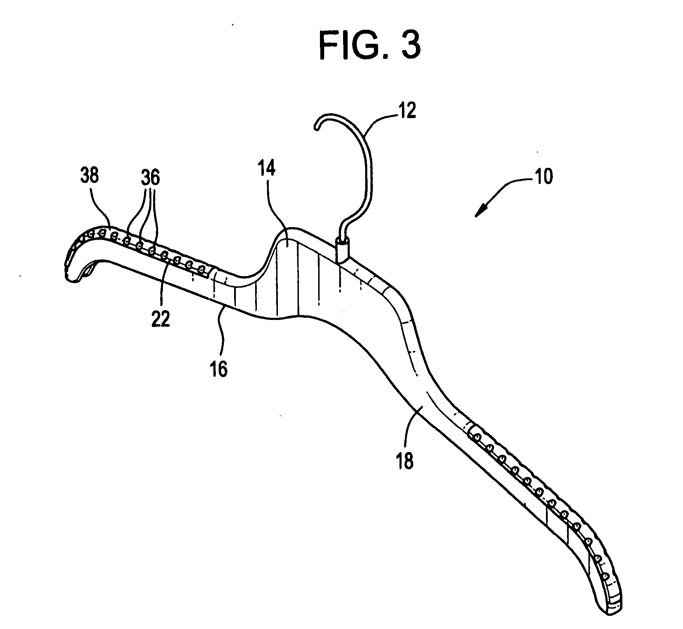

Fig. 3 illustrates a perspective view of an exemplary embodiment of the garment hanger of Fig. 1; and

Fig. 4 illustrates a front elevation view of a hanger according to an alternate embodiment of the present invention.

### Detailed Description of the Invention

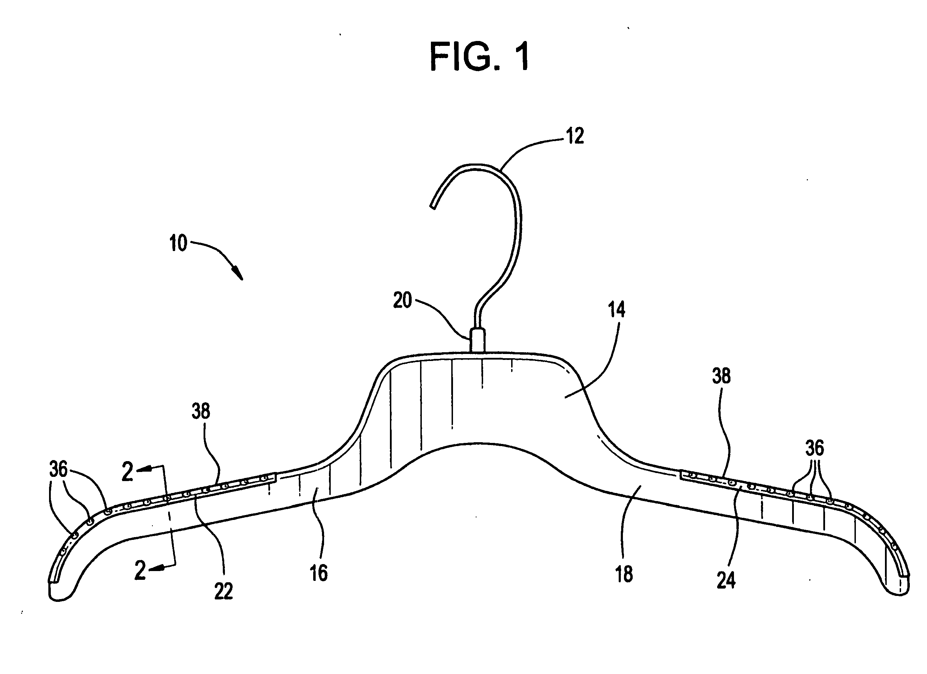

Referring now in detail to the drawings, and particularly the hanger construction as shown in FIG. 1, there is illustrated a front elevation view of a molded plastic garment hanger, generally 10, having a central hook portion 12, which is upstanding from the hanger body 14. Body 12 includes a pair of coplanar and oppositely directed arms 16 and 18 for suspending one or more garments, as is well known in industry. Arms 16, 18 may also extend downwardly from body 12.

In order to provide reinforcement for the hook portion 12, a suitable gusset or flange 20 may be molded into the hanger proximate the juncture between base of the hook portion 12 and the hanger body 14. This will impart an enhanced degree of strength against bending of the hook portion in the plane of the body 14 under the weight of a supported garment. In the exemplary embodiment of Fig. 1, hook portion 12 is formed of metal that is joined to the body 12 at flange 20. In other embodiments, the hook portion 12 may be formed of plastic and/or integrally molded with the body 12, notwithstanding the presence of absence of a flange 20.

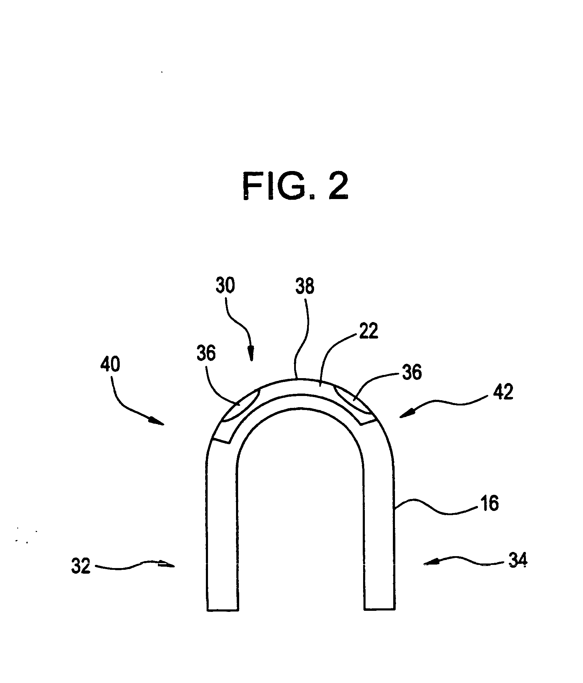

Either or both of arms 16, 18 of hanger 10 may incorporate a non-slip plastic insert 22, 24. The molded body member has 'u'-section arms, illustrated in cross-section in FIG. 2, which provide structural strength for the hanger and support for the garment. The 'u' cross-section of the exemplary embodiment has an upwardly facing surface 30, which is arcuate, and laterally facing surfaces 32, 34. Other cross-sectional beam geometries, including 'I', 'square-m', and 'C', among others known in the art, may be substituted without departing from the scope of the present invention.

Provided along either or both lateral edges 40, 42, of the upwardly facing surface 30 and adjacent the intersection of the laterally facing surfaces 32, 34, are a plurality of locking cells 36 in the form of concave recesses. Additionally, locking cells 36 may be formed as other localized surface discontinuity, including but not limited to recesses or depressions. In conjunction with the generally contiguous garment-supporting surface 38 on an upwardly facing surface 30, locking cells 36 improve the frictional interface between the hanger and the garment to be hung from it without forming sharp localized deformations in the hung garment, which is undesirable.

As illustrated in FIG. 2, the insert 22 is formed in an upwardly facing surface 30 of the arm 16 to provide a non-slip gripping surface for hanger 10. The non-slip insert 22 is embedded within the outwardly extending arm 16, but may alternately be formed on top of the arm 16.

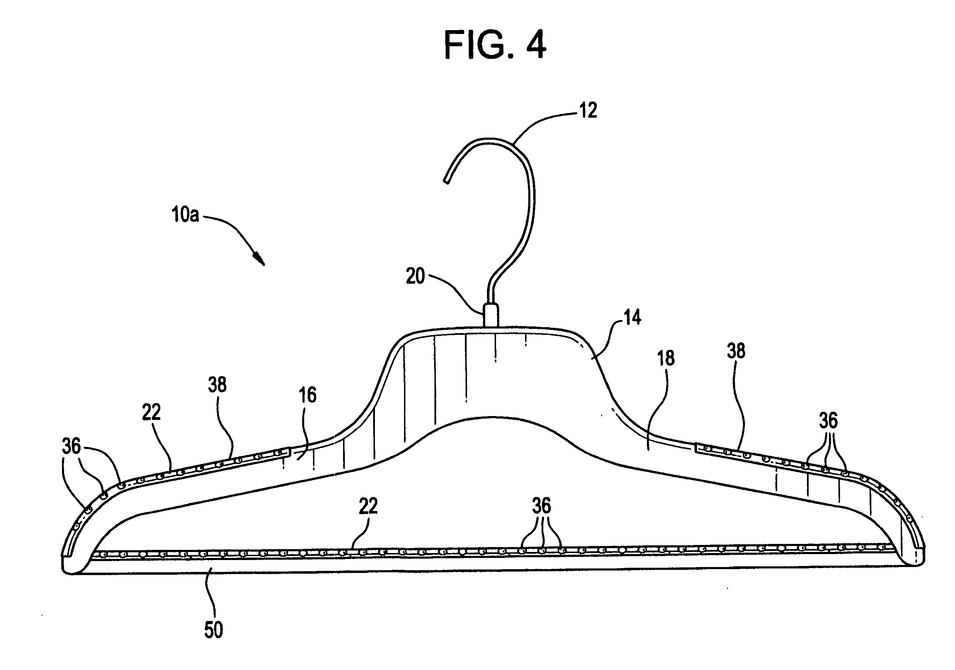

Referring now to Fig. 4, with like reference numerals referring to like structures, it will be appreciated by those skilled in the art that the non-slip insert 22 described herein can be applied to a horizontal bar which may be provided below arms 16, 18 to support trousers or other garments, for example. According to an alternate embodiment of the present invention, a hanger, generally 10a, has a horizontal bar 50 beneath arms 16, 18. Horizontal bar 50 has a non-slip insert 22, having locking cell 36, generally as described above with respect to arms 16, 18. It will be appreciated that a non-slip insert 22 may be provided on a horizontal bar 50 irrespective of the arms 16, 18. It will further be appreciated that the non-slip gripping surface described is applicable to the arm 16, 18, or to a horizontal bar 50, themselves, without a non-slip insert 22 on or embedded in it.

In the exemplary embodiment, the non-slip surface extends substantially to the distal end of each arm 16, 18, including around any downward curvature which may be provided at the distal ends. For the sake of illustration, hanger 10 is a molded plastic hanger, and the non-slip plastic inserts 22, 24 are formed in a co-extrusion process. The bond between the insert 22 and the arms 16, 18 may be a mechanical bond, a molded plastic bond, a fused bond or a combination thereof as desired. The factors which determine the type of bond include the chemical compatibility of the plastics involved, the melting and fusing temperatures of the respective plastics involved, the temperatures at which the plastic is injected into the respective mold cavities, the temperature at which the cavity is maintained, and the respective dwell time between the injection of the first plastic, and the removal of the mold insert and the injection of the second plastic.

By adjusting the parameters of the process, one may achieve a mechanical bond, a plastic molded bond, or a wholly fused bond including the surface layers of the plastics being intermixed with each other. In still another embodiment, distortion of the hanger mechanical interlocks as the second hot melt of plastic material flows into the insert produces a bond which is the combination of mechanical interlocking and controlled thermal deformation. This combination form of bonding is particularly advantageous for products, including but not limited to hangers having shoulder inserts, which will be subject to tensile and shear forces as well as compressive forces to ensure superior integrity between the two plastic materials being bonded, particularly in instances with materials having lower levels of chemical synergy.

The plastic materials which can be employed with the molding operation in order to produce the inventive composite molded plastic hanger may include, but are not limited to, plastic materials such as polystyrene, SAN, ABS, PPO, nylon, polypropylene (PP), polyethylene, PET, polycarbonates (PC), acrylics, K resin, and polyvinyl chloride (PVC) among others, each being provided with specific coloration in conformance with the specific demands of the customer. When it is desired to mold composite hangers with the non-slip inserts, polypropylene and polyethylene primary materials may be combined with ethylene vinyl acetate (EVA), low density polyethylene, or thermoplastic elastomers for the non-slip portion. Alternately, if polystyrene, ABS or SAN primary materials are desired, they may be combined with ethylene vinyl acetate, PVC, thermoplastic elastomers or thermoplastic rubbers. Other materials suitable for the primary body construction such as PVC, PC, PMMA or a mixture of a polystyrene with one of the foregoing primary materials may be used with EVA, PVC, thermoplastic elastomers or thermoplastic rubbers and the non-slip insert material.

In one preferred embodiment, styrene or polypropylene is used as the primary material with a softer material (such as a thermoplastic rubber including, but not limited to, KRATON) used for the insert. In another embodiment a harder material can used as the insert including, but not limited to, polyethylene with a propylene membrane.

More particularly, when a chemical bond is desired, it is preferable to use styrene as the primary material or polypropylene as the primary material with EVA/PP mix as insert material. When a chemical and mechanical bond is desired, it is preferable to use styrene as the primary material with styrene rubber as insert material. When a mechanical bond is desired, it is preferable to use polypropylene main as the primary material with polyethylene as insert material.

In a particularly preferred embodiment of the present invention, a combination of mechanical interlocking and controlled thermal deformation bonds the first and second plastic materials. The mechanical bonding is accomplished by a series of interlocking buttonhole joints. Commercially available equipment with specific adaptations may be used to mold the composite hanger of the present invention.

The primary material contemplated in an exemplary embodiment is a combination of Dow styrene grades 693 and 478. The secondary material is a D grade material available from Shell Oils sold under the trade name of KRATON. The melt temperature of the KRATON is about 600 degrees F, plus or minus 50 degrees F.

From the foregoing illustrations it is readily apparent that the present invention includes an extremely simple garment hanger construction, preferably produced in a coinjection mold through a simple two step process which requires a minimum amount of effort and expenditure, while being versatile in its applications due to the specific structural aspects of the members. No costly hand labor would be required to affix non-slip strips to the shoulders of the hangers. All is accomplished in a single molding operation.

Shown and described herein are what are merely exemplary embodiments of the present invention. These descriptions are meant to be illustrative, and not limiting, on the scope of the present invention. Those skilled in the art will appreciate that various modifications and changes in form or detail can readily be made without departing from the scope of the invention. It is therefore intended that the invention not be limited to the exact form and detail herein shown and described nor to anything less than the whole of the invention as defined by the appended claims.

## Claims

1. A hanger (10) for a garment comprising:
a body portion (14) having a hook member (12) extending upward;
two arms (16, 18) extending outward from the body portion (14) in opposing directions from one another;
wherein a first arm (16) has a substantially contiguous garment supporting surface (38) on an upwardly facing side (30) comprising an arcuate surface, and further comprising a first plurality of locking cells (36) along a first lateral edge (40) of the upwardly facing side (30), said locking cells (36) comprising localized concave depressions in the surrounding garment supporting surface (38).

2. The hanger (10) according to claim 1 further comprising a second plurality of locking cells (36) along a second lateral edge (42) of the upwardly facing side (30).

3. The hanger (10) according to claim 1, wherein a second arm has a substantially contiguous garment supporting surface (38) on an upwardly facing side (30), and
further comprising a second plurality of locking cells (36) along a second lateral edge (42) of the upwardly facing side (30).

4. The hanger (10) according to claim 1 further comprising a non-slip insert forming part (22) of the upwardly facing side (30) of the first arm (16).

5. The hanger (10) according to claim 4, wherein the non-slip insert (22) is embedded into the first arm (16).

6. The hanger (10) according to claim 4, wherein at least the garment-supporting surface (38) is formed by the non-slip insert (22).

7. The hanger (10) according to claim 4, wherein at least the locking cells (36) are formed by the non-slip insert (22).

8. The hanger (10) according to claim 4, wherein at least the garment supporting surface (38) and the locking cells (36) are formed by the non-slip insert (22).

9. The hanger (10) according to claim 4, wherein the hanger (10) is a molded plastic hanger (10), and the non-slip insert (22) is formed on the hanger (10) by a co-extrusion process.

10. The hanger (10) according to claim 1, wherein each arm (16, 18) has a downward curvature proximate a distal end thereof.

11. The hanger (10) according to claim 1, wherein the first plurality of locking cells (36) extends substantially to a distal end of said arm (16, 18).

12. The hanger (10) according to claim 1, further comprising a horizontal bar (50) positioned beneath the two arms (16, 18), the horizontal bar (50) comprising a second substantially contiguous garment supporting surface on a second upwardly facing side thereof, the horizontal bar (50) further comprising a second plurality of locking cells (36) along a lateral edge of the second upwardly facing side.

13. The hanger (10) according to claim 4 or 7, wherein the locking cells are separately formed adjacent to the intersection of a laterally facing side (32) with the upwardly facing side (30).

## Patentansprüche

1. Bügel (10) für ein Kleidungsstück, umfassend:
ein Rumpfteil (14) mit einem sich nach oben erstreckendem Hakenelement (12);
zwei Arme (16, 18), die sich vom Hauptteil (14) in voneinander abgewandten Richtungen nach außen erstrecken;
wobei ein erster Arm (16) eine im Wesentlichen durchgängige Kleidungsstückhaltefläche (38) auf einer nach oben zeigenden Seite (30) aufweist, eine gebogene Fläche umfassend, und weiterhin eine erste Vielzahl von Sperrzellen (36) entlang der ersten Seitenkante (40) der nach oben zeigenden Seite (30) umfassend, wobei die Sperrzellen (36) örtlich begrenzte konkave Vertiefungen in der umgebenden Kleidungsstückhaltefläche (38) aufweisen.

2. Bügel (10) gemäß Anspruch 1, weiterhin umfassend eine zweite Vielzahl an Sperrzellen (36) entlang einer zweiten Seitenkante (42) der nach oben zeigenden Seite (30).

3. Bügel (10) gemäß Anspruch 1, wobei ein zweiter Arm eine im Wesentlichen durchgängige Kleidungsstückhaltefläche (38) auf einer nach oben gewandten Seite (30) aufweist, und weiterhin eine zweite Vielzahl an Sperrzellen (36) entlang einer zweiten Seitenkante (42) der nach oben zeigenden Seite (30) aufweist.

4. Bügel (10) gemäß Anspruch 1, weiterhin ein einen rutschfesten Einsatz bildendes Teil (22) der nach oben zeigenden Seite (30) des ersten Arms (16) umfassend.

5. Bügel (10) gemäß Anspruch 4, wobei der rutschfeste Einsatz (22) in den ersten Arm (16) integriert ist.

6. Bügel (10) gemäß Anspruch 4, wobei zumindest die Kleidungsstückhaltefläche (38) durch den rutschfesten Einsatz (22) gebildet wird.

7. Bügel (10) gemäß Anspruch 4, wobei zumindest die Sperrzellen (36) durch den rutschfesten Einsatz (22) gebildet werden.

8. Bügel (10) gemäß Anspruch 4, wobei zumindest die Kleidungsstückhaltefläche (38) und die Sperrzellen (36) durch den rutschfesten Einsatz (22) gebildet werden.

9. Bügel (10) gemäß Anspruch 4, wobei der Bügel (10) ein formgepresster Plastikbügel (10) ist und der rutschfeste Einsatz (22) auf dem Bügel (10) durch einen Koextrusionsprozess gebildet wird.

10. Bügel (10) gemäß Anspruch 1, wobei jeder Arm (16, 18) eine nach unten verlaufenden Krümmung nahe dem proximalen Ende davon aufweist.

11. Bügel (10) gemäß Anspruch 1, wobei die erste Vielzahl von Sperrzellen (36) sich im Wesentlichen zu einem distalen Ende des Arms (16, 18) hin erstreckt.

12. Bügel (10) gemäß Anspruch 1, weiterhin umfassend eine horizontale Stange (50), die unterhalb der beiden Arme (16, 18) angeordnet ist, wobei die horizontale Stange (50) eine zweite im Wesentlich durchgängige Kleidungsstückhaltefläche auf einer zweiten nach oben zeigenden Seite davon aufweist, wobei die horizontale Leiste (50) weiterhin eine zweite Vielzahl von Sperrzellen (36) entlang einer Seitenkante der zweiten nach oben zeigenden Seite aufweist.

13. Bügel (10) gemäß Anspruch 4 oder 7, wobei die Sperrzellen einzeln neben dem Schnittpunkt einer seitlich zeigenden Seite (32) mit der nach oben zeigenden Seite (30) ausgebildet sind.

## Revendications

1. Cintre (10) pour un vêtement comprenant :
une partie de corps (14) ayant un élément de crochet (12) s'étendant vers le haut ;
deux bras (16, 18) s'étendant vers l'extérieur à partir de la partie de corps (14) dans des directions opposées l'un par rapport l'autre ;
dans lequel un premier bras (16) a une surface de support de vêtement (38) sensiblement contiguë sur un côté orienté vers le haut (30) comprenant une surface arquée, et comprenant en outre une première pluralité de cellules de blocage (36) le long d'un premier bord latéral (40) du côté orienté vers le haut (30), lesdites cellules de blocage (36) comprenant des dépressions concaves aux environs de la surface de support de vêtement (38).

2. Cintre (10) selon la revendication 1 comprenant en outre une seconde pluralité de cellules de blocage le long d'un second bord latéral (42) du côté orienté vers le haut (30).

3. Cintre (10) selon la revendication 1, dans lequel un second bras a une surface de support de vêtement (38) sensiblement contiguë sur un côté orienté vers le haut (30), et comprenant en outre une seconde pluralité de cellules de blocage (36) le long d'un second bord latéral (42) du côté orienté vers le haut(30).

4. Cintre (10) selon la revendication 1 comprenant en outre une partie formant un insert anti-glisse (22) du côté orienté vers le haut (30) du premier bras (16).

5. Cintre (10) selon la revendication 4, dans lequel l'insert anti-glisse (22) est noyé dans le premier bras (16).

6. Cintre (10) selon la revendication 4, dans lequel au moins la surface de support de vêtement (38) est formée par l'insert anti-glisse (22).

7. Cintre (10) selon la revendication 4, dans lequel au moins les cellules de blocage (36) sont formées par l'insert anti-glisse (22).

8. Cintre (10) selon la revendication 4, dans lequel au moins la surface de support de vêtement (38) et les cellules de blocage (36) sont formées par l'insert anti-glisse (22).

9. Cintre (10) selon la revendication 4, dans lequel le cintre (10) est un cintre (10) en plastique moulé, et l'insert anti-glisse (22) est formé sur le cintre (10) par un procédé de co-extrusion.

10. Cintre (10) selon la revendication 1, dans lequel chaque bras (16, 18) a une courbure descendante à proximité de son extrémité distale.

11. Cintre (10) selon la revendication 1, dans lequel la première pluralité de cellules de blocage (36) s'étend sensiblement vers une partie distale dudit bras (16, 18).

12. Cintre (10) selon la revendication 1, comprenant en outre une barre horizontale (50) positionnée au-dessous des deux bras (16, 18), la barre horizontale (50) comprenant une seconde surface de support de vêtement sensiblement contiguë sur son second côté orienté vers le haut, la barre horizontale (50) comprenant en outre une seconde pluralité de cellules de blocage (36) le long d'un bord latéral du second côté orienté vers le haut.

13. Cintre (10) selon l'une des revendications 4 ou 7, dans lequel les cellules de blocage sont formées séparément de manière adjacente à l'intersection d'un côté orienté latéralement (32) avec le côté orienté vers le haut (30).
